# EUROPEAN PATENT SPECIFICATION

(11) **EP 2 530 766 B1**
(45) Date of publication and mention of the grant of the patent: **19.07.2017**
(21) Application number: 11168078.1
(22) Date of filing: 30.05.2011
(51) Int. Cl.: H01M 4/20, H01M 4/04, B29D 29/00, B29D 29/06

(54) **Battery pasting belt**
Batteriepastierungsgurt
Ligne à empâtage pour batterie

(43) Date of publication of application: 05.12.2012
(73) Proprietor: Heimbach GmbH & Co. KG, 52353 Düren (DE)
(72) Inventor: Rava, Sergio, 22010 Ossuccio (Co) (IT)
(74) Representative: Albrecht, Ralf

(56) References cited:
- EP-A1- 1 093 908
- GB-A- 1 097 034
- JP-A- 3 141 553
- JP-A- 56 036 868
- JP-A- 2006 181 784
- JP-A- 2011 031 572

## Description

The present invention relates to the use of a belt as battery pasting belt, in particular in the form of an endless belt, having a product side and an opposing machine side and comprising a base fabric which is provided with a product side pressing layer. This invention also relates to a battery electrode pasting apparatus equipped with such a battery pasting belt.

In lead battery production, water-based lead oxide paste is applied to a lead grid or matrix under pressure. After removal of the water from the lead oxide paste, the covered lead grid can be used as a battery electrode in a typical sulphuric acid lead accumulator, mostly used as starting batteries of vehicles and the like.

A typical fabrication apparatus for the production of such lead battery electrodes is described in US2009/0255604 A1. This apparatus is equipped with a battery pasting belt on which the lead grids are covered with lead oxide paste. In order to improve the coherence between the lead grid and the oxide paste, the lead oxide covered grid is pressed after the paste has been applied followed by a drying step.

In EP 0 133 478 B1, an endless belt for pasting machines of electric lead battery plates as set out in the beginning is described in more detail. The belt is composed of a single outer endless layer of woven threaded fabric made from cotton fibers, an inner backing layer formed of non-woven webs of synthetic fibers and an intermediate layer of light woven meshes, which is inserted between the outer layer and the non-woven webs. This built-up shall in particular allow equal water absorption of the belt over the belt surface and high dimensional stability during operation.

This belt has however the disadvantage that the cotton fibers tend to incorporate lead oxide during operation which leads to a hardening of the belt over time while also reducing the water handling capacity of the belt. Further, the lead embedding in the cotton fiber structure is almost irreversible and makes it difficult or impossible to clean the belt, especially during operation.

To overcome these problems, another type of battery pasting belts is suggested in EP 2 032 475 B1. The belt described therein is an endless belt composed of four layers attached to one another, whereas the layers consists of synthetic fibers in order to overcome problems resulting from cotton fibers as formally used. The synthetic fibers have a good water absorption and desorption capability while remaining easy to clean compared to cotton fibers.

The belt constructions known from the prior art are however not found satisfactory in every aspect. Especially for the production of AGM-batteries (absorbent glass fiber mat) a higher water content of the lead oxide paste is required. Further, the water content of the lead oxide paste needs to be kept equally distributed throughout the production process, at least during the pressing procedure. In other words, excessive dewatering of the lead oxide paste should be avoided at that stage. However, the known battery pasting belts are primarily designed for good water absorption capabilities and may therefore not fulfill these requirements.

GB 1 097 034 A discloses a conveyer belt comprising a textile material bonded with elastomeric material and having secured on at least one face of the textile material an outer conveying surfaces formed from cross-linked or vulcanized polyethylene. The elastomer material may be inter alia silicon rubber, which may be used for impregnation or coating the textile material.

EP 1 093 908 A1 discloses a belt required by a machine used to manufacture a variety of corrugated paper board. This belt comprises a single base structure being in the form of an endless loop and being formed by machine-direction and cross-machine-direction yarns, wherein at least one layer of staple fiber material is needled into the outside of said base structure and extending at least partly therethrough. The base structure and the staple fiber material is impregnated with a polymeric resin material, which is a high-temperature resistant material.

It is an object of the present invention to allocate a battery pasting belt with a reduced tendency of water absorption.

This object has been solved with the use of a belt as battery pasting belt, in particular in the form of an endless belt, having a product side and an opposing machine side and comprising a base fabric which is provided with a product side pressing layer in which the product side pressing layer is provided with a silicone impregnation, particularly extending over the entire product side.

The research work which has led to the present invention has revealed that with such an impregnation, the water absorption characteristics of a battery pasting belt can be significantly reduced. Furthermore, the silicone impregnation enhances the elasticity and thus the physical resilience of the belt. At the same time, the silicone impregnation of the product side pressing layer prevents the intrusion of lead oxide into the pasting belt and therefore the embedding of lead oxide which may lead to a hardening of the belt. So the belt maintains its physical properties over a longer production life time cycle.

A further embodiment of the battery pasting belt is characterized in that the base fabric is provided with a machine side pressing layer. This additional layer on the machine side is advantageous because it improves the pressure distribution on the pasting belt during operation. In addition, it protects the intermediate base fabric from direct contact with the pressing parts of a pasting apparatus.

Although the thickness relations between the machine side pressing layer and the base fabric may vary in brought ranges, it is preferred if the thickness of the product side pressing layer is lower than the thickness of the base fabric, the thickness of which is in particular lower than the thickness of the machine side pressing layer.

Such a relation is advantageous, because a thicker machine side pressing layer may serve to distribute the pressure more evenly and to protect the base fabric from direct contact with machine parts, whereas the thinner product side pressing layer allows transferring higher pressures to the battery electrodes during the pasting process.

In particular, the thickness ratio of the machine side pressing layer to the base fabric ranges from 3 : 1 to 1.2 : 1 and/or the thickness ratio of the base fabric to the product side pressing layer ranges from 3 : 1 to 1.2 : 1, whereas in particular the thickness ratio of the machine side pressing layer to the base fabric and to the product side pressing layer is about 3,1 : 1,7 :1.

In a further preferred embodiment of the present invention, the machine side pressing layer is provided with a silicone impregnation, the impregnation extending particularly over the entire machine side, whereas the impregnation extends preferably substantially through the entire machine side pressing layer.

Such a construction is advantageous, because it further reduces the capability of the battery pasting belt to absorb water and thus ensures that the lead oxide paste is not excessively dehydrated during the pasting and pressing process.

The pressing layers, i.e. the product side pressing layer and/or the machine side pressing layer, may be made from woven or non-woven materials, whereas non-wovens are preferred, in particular in the form of fiber batts and/ or fiber threads. The non-wovens can be used in the form of needled staple fibers or crimped staple fibers, for example. Such pressing layers may be attached to the base fabric by needling.

Regarding the base fabric, a wide variety of fabrics may be used, whereas a knitted fabric, a threaded fabric, a braided fabric, a netting, a yarn array, a nonwoven fabric or a woven fabric may preferably be used. From the woven fabrics such types are preferred, which are woven in a plain weave. Base fabrics of that kind may especially increase the dimensional stability of the battery pasting belt, in particular against tension forces.

The base fabric may be present in the form of a single layer material but may however also comprise a plurality of fabric layers, in particular three to eight fabric layers, preferably four to seven fabric layers.

These several layers can be realized by combining several plies of individual single layer fabrics or alternatively, by composing the base layer of at least one single layer fabric, which is spirally wound on itself as to form the plurality of fabric layers. After being wound, the starting edge and the ending edge of the single layer fabric should oppose each other without overlap in order to provide a substantially constant thickness of the base fabric. In other words, the single layer fabric is wound in mostly full rounds only.

It is also possible to superimpose two or more single layer fabrics and to spirally wind these layers to achieve an alternating layer design. In this case it is further preferred to use different single layer fabrics. Accordingly, one individual layer may be optimized for dimensional stability in a machine direction (MD), whereas another individual layer superimposed on the first one provides a high dimensional stability in a cross machine direction (CMD) of the belt. The resulting base fabric combines both dimensional stability in MD and CMD.

In another embodiment of the battery pasting belt, the pressing layers and/or the base fabric comprise a polymeric fiber material which is in particular selected from polyesters, polyamides, polyurethanes and/or polyphenylene. These materials are preferred, because they further reduce the tendency of the pasting belt to soak and keep water from the lead oxide paste and therefore ensure low dehydration of the paste during the pressing procedure. Besides that, these materials show good mechanical recovery properties as well.

According to a further preferred embodiment of the battery pasting belt, the silicone impregnation extends at least partly through the base fabric, in particular through at least one fabric layer of the base fabric, especially through the entire base fabric.

The silicone impregnation may comprise any types of silicone polymers, preferably such silicones, which have elastic properties at room temperature. This can be achieved by using silicone polymers, silicone-fluoro-polymers and/or silane-polymers, in particular silicone elastomers and/or fluoro-silicone elastomers.

The silicone impregnation may further comprise typical additives, like fillers, pigments, softeners, rheology modifiers, adhesion promoters and the like. The silicone impregnation can be applied in the form of a reactive system, i.e. silicone pre-polymers are applied to the pasting belt and reacted via a polymerization reaction to the silicone impregnation. The polymerization may take place as a polycondensation reaction, during which typical leaving groups are removed from the pre-polymers, like methanol or acetic acid, for example.

The silicone impregnation may be provided by any suitable method to the battery pasting belt, as for example by spray coating, roll coating, knife coating, pressure coating, extrusion coating, printing and/ or dip coating.

Another preferred embodiment of the battery pasting belt is characterized in that the outer surface of at least the product side pressing layer is provided with an anti-adhesive coating, in particular with a PTFE-coating and/ or a fluoro-elastomer coating. Such an anti-adhesive coating is advantageous, as it leads to an easier separation of the pasted battery electrode after the pressing process, whereas especially the deposition of lead-oxide paste residues on the battery pasting belt is reduced or may even be completely prevented. Besides that, the anti-adhesive coating may further reduce the water absorption tendency of the pasting belt due to the typically non-polar nature of the anti-adhesive coating.

It is also possible to provide the outer surface of the machine side pressing layer with such an anti-adhesive coating, for example to reduce wear of the pasting belt. The anti-adhesive coating may be provided by any known technic for applying such coatings, like spray coating, roll coating, knife coating, pressure coating, printing and/ or extrusion coating.

In order to improve the cohesion between the anti-adhesive coating and the respective outer surface, the outer surface of the product side pressing layer is pre-treated before the provision of the silicone impregnation and/ or before the provision of the anti-adhesive coating. This pretreatment can be carried out by a corona or flame treatment, for example. The same pretreatment may also be applied to the machine side pressing layer, in case it shall be provided with an anti-adhesive coating.

The pretreatment has the further advantage that the belt surface is roughened so that the grip with reference to the objects transported on the belt is improved, i.e. especially with respect to battery plates.

A further object of this invention is a battery electrode pasting apparatus equipped with a battery pasting belt of this invention. The apparatus can have the typical built-up, for example as described in US2009/0255604 A1 or JP 2002 231231 A.

In the following, this invention is described in more detail by means of the following examples shown in the figures. They show in
- Figure 1: a side-sectional view of a first embodiment of an battery pasting belt,
- Figure 2: a second embodiment of an battery pasting belt and
- Figure 3: a multi-layer base fabric used for the battery pasting belt.

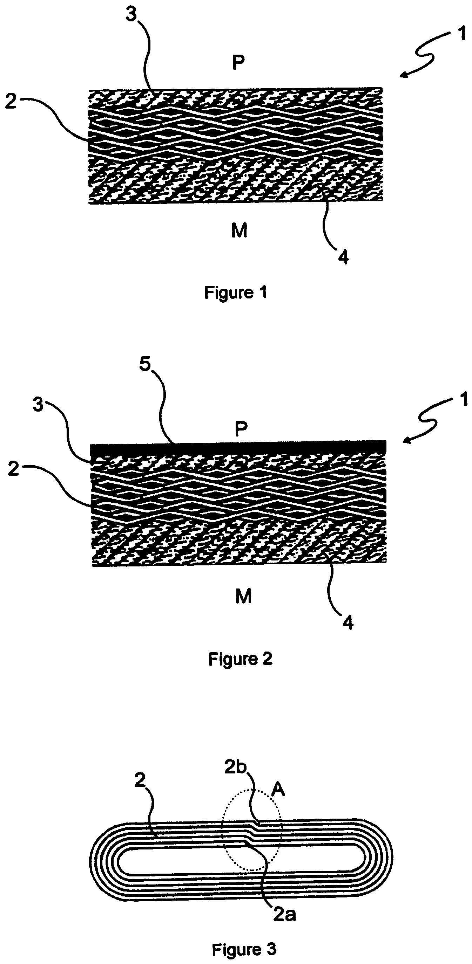

In Figure 1, a battery pasting belt 1 is displayed in side-sectional view. The battery pasting belt 1 has a product side P and an opposing machine side M and comprises a base fabric 2, consisting of five layers of a polyester fabric woven in a plain weave.

The base fabric 2 is provided on its product side P with a product side pressing layer 3. The product side pressing layer 3 is provided with a silicone impregnation, extending over the entire product side P and through the entire product side pressing layer 3.

On the machine side M, the base fabric 2 is provided with a machine side pressing layer 4. The machine side pressing layer 4 is provided with a silicone impregnation, particularly extending over the entire machine side M of the battery pasting belt 1 and through the entire machine side pressing layer 4.

The product side pressing layer 3 and the machine side pressing layer 4 consist of polyester fiber batts, which are attached to the base fabric 2 by needling. The thickness of the product side pressing layer 3 is about 1.5 mm, the layer thickness of the base fabric is 2.5 mm and the layer thickness of the machine side pressing layer is 4.6 mm leading to a thickness ratio of 1 : 1.7 : 3.07 and an overall thickness of the battery pasting belt 1 of 8.6 mm.

The silicone impregnation has been applied by dip-coating in a reactive pre-polymer silicone formulation available under the product name elastosil®E50 from Wacker, Germany. After curing, the silicone impregnation material has a hardness shore A according to DIN53505-ISO868 of 35, an elongation at break according to DIN35504S1/ISO37 of 350%, a tensile strength according to DIN35504S1/ISO37 of 3.6 N/mm² and a tear strength according to ASTN D624 of 3.5 N/mm².

Figure 2 shows an alternative embodiment of the battery pasting belt 1, whereas the difference to the embodiment presented in Figure 1 lies in that the product side pressing layer 3 is further covered with an anti-adhesive coating in the form of a PTFE spray-coating 5. Before the PTFE coating 5 has been applied to the product side pressing layer 3, the product side pressing layer 3 is flame-pretreated. After this pretreatment, the PTFE coating 5 is sprayed upon the outer surface of the product side pressing layer 3. The spray formulation used for this purpose is available from datt chimica, Italy under the product name Neutrodatt WR. In Figure 3, a side-sectional view of a base fabric 2 to be used for the battery pasting belt 1 is shown. The base fabric 2 is composed of five fabric layers, which is achieved by winding a single layer fabric spirally on itself as to form the five fabric layers. The starting edge 2a and the ending edge 2b oppose each other without overlap in order to provide a substantially constant thickness of the base fabric 2 also in a transition area A, vertically extending between the starting edge 2a and the ending edge 2b. In other words, the single layer fabric is wound in mostly full rounds.

## Claims

1. Use of a belt as battery pasting belt (1), for pasting battery electrodes, especially lead battery plates, in particular in the form of an endless belt, having a product side (P) and an opposing machine side (M) and comprising a base fabric (2) which is provided with a product side pressing layer (3), **characterized in that** the product side pressing layer (3) is provided with a silicone impregnation, the impregnation extending particularly over the entire product side (P).

2. Use according to claim 1, **characterized in that** the base fabric (2) is provided with a machine side pressing layer (4), whereas the machine side pressing layer (4) is particularly provided with a silicone impregnation, the impregnation extending particularly over the entire machine side (M), whereas the impregnation extends especially substantially through the entire machine side pressing layer (4).

3. Use according to claim 1 or 2, **characterized in that** the thickness of the product side pressing layer (3) is lower than the thickness of the base fabric (2), the thickness of which is in particular lower than the thickness of the machine side pressing layer (4).

4. Use according to one of the preceding claims, **characterized in that** the pressing layer(s) (3, 4) is (are) selected from nonwovens, in particular from fiber batts and/ or fiber threads, whereas the pressing layers (3, 4) are attached to the base fabric (2) especially by needling.

5. Use according to one of the preceding claims, **characterized in that** the base fabric (2) is a knitted fabric, a threaded fabric, a braided fabric, a netting, a yarn array, a nonwoven fabric or a woven fabric, whereas the woven fabric is in particular woven in a plain weave.

6. Use according to one of the preceding claims, **characterized in that** the base fabric (2) comprises a plurality of fabric layers, in particular 3 to 8 fabric layers, whereas the base fabric (2) is especially composed of at least one single layer fabric which is spirally wound on itself as to form the plurality of fabric layers.

7. Use according to one of the preceding claims, **characterized in that** the pressing layers (3, 4) and/ or the base fabric (2) comprise a polymeric fiber material which is in particular selected from polyesters, polyamides, polyurethanes and/ or polyphenylene.

8. Use according to one of the preceding claims, **characterized in that** the silicone impregnation extends substantially through the entire product side pressing layer (3).

9. Use according to one of the preceding claims, **characterized in that** the silicone impregnation extends at least partly through the base fabric (2), in particular through at least one fabric layer of the base fabric (2), especially through the entire base fabric (2).

10. Use according to one of the preceding claims, **characterized in that** the silicone impregnation comprises silicone polymers, silicone-fluoro- polymers and/ or silane-polymers, in particular silicone elastomers and/or fluoro-silicone elastomers.

11. Use according to one of the preceding claims, **characterized in that** the silicone impregnation has been provided by spray coating, roll coating, knife coating, pressure coating, extrusion coating, printing and/ or dip coating.

12. Use according to one of the preceding claims, **characterized in that** the outer surface of at least the product side pressing layer (3) is provided with an anti-adhesive coating (5), in particular with a PTFE-coating and/ or a fluoro-elastomer coating, whereas the anti-adhesive coating (5) has especially been provided by spray coating, roll coating, knife coating, pressure coating, extrusion coating and/ or printing.

13. Use according to one of the preceding claims, **characterized in that** the outer surface of the product side pressing layer (3) has been pretreated before the provision of the silicone impregnation and/ or the provision of the anti-adhesive coating (5), in particular with a corona or flame treatment.

14. A battery electrode pasting apparatus having a battery pasting belt (1) as defined in one of the claims 1 to 13.

## Patentansprüche

1. Verwendung eines Bandes als Batterie-Pastierband (1) zum Pastieren von Batterieelektroden, insbesondere Bleibatterieplatten, insbesondere in der Form eines Endlosbandes mit einer Produktseite (P) und einer gegenüberliegenden Maschinenseite (M) und umfassend ein Grundgewebe (2), das mit einer produktseitigen Druckschicht (3) versehen ist, **dadurch gekennzeichnet, dass** die produktseitige Druckschicht (3) mit einer Silikonimprägnierung versehen ist, wobei sich die Imprägnierung im Wesentlichen über die gesamte Produktseite (P) erstreckt.

2. Verwendung nach Anspruch 1, **dadurch gekennzeichnet, dass** das Grundgewebe (2) mit einer maschinenseitigen Druckschicht (4) versehen ist, wobei die maschinenseitige Druckschicht (4) insbesondere mit einer Silikonimprägnierung versehen ist, wobei sich die Imprägnierung im Wesentlichen über die gesamte Maschinenseite (M) erstreckt, wobei die Imprägnierung sich insbesondere im Wesentlichen durch die gesamte maschinenseitige Druckschicht (4) erstreckt.

3. Verwendung nach Anspruch 1 oder 2, **dadurch gekennzeichnet, dass** die Dicke der produktseitigen Pressschicht (3) niedriger als die Dicke des Grundgewebes (2) ist, dessen Dicke insbesondere geringer als die Dicke der maschinenseitigen Pressschicht (4) ist.

4. Verwendung nach einem der vorherigen Ansprüche, **dadurch gekennzeichnet, dass** die Pressschicht(en) (3, 4) ausgewählt ist (sind) aus nicht-Gewebtem, insbesondere aus Fasermatten und/oder Faserzwirnen, während die Pressschichten (3, 4) an dem Grundgewebe (2) insbesondere durch Vernadeln befestigt sind.

5. Verwendung nach einem der vorhergehenden Ansprüche, **dadurch gekennzeichnet, dass** das Grundgewebe (2) ein gewirktes Gewebe, ein gezwirntes Gewebe, ein geflochtenes Gewebe, ein Netz, eine Garnanordnung, ein nicht gewebtes Gewebe oder ein gewebtes Gewebe ist, wobei das gewebte Gewebe insbesondere in einer ebenen Bindung gewoben ist.

6. Verwendung nach einem der vorhergehenden Ansprüche, **dadurch gekennzeichnet, dass** das Grundgewebe (2) eine Mehrzahl von Gewebeschichten, insbesondere drei bis acht Gewebeschichten aufweist, wobei das Grundgewebe (2) insbesondere aus wenigstens einem einschichtigen Gewebe besteht, welches spiralförmig auf sich selbst gewickelt ist, um die Mehrzahl von Gewebeschichten zu bilden.

7. Verwendung nach einem der vorherigen Ansprüche, **dadurch gekennzeichnet, dass** die Druckschichten (3, 4) und/oder das Grundgewebe (2) ein polymeres Fasermaterial umfassen, das insbesondere ausgewählt ist aus Polyestern, Polyamiden, Polyurethanen und/oder Polypropylen.

8. Verwendung nach einem der vorherigen Ansprüche, **dadurch gekennzeichnet, dass** die Silikonimprägnierung sich im Wesentlichen durch die gesamte produktseitige Pressschicht (3) erstreckt.

9. Verwendung nach einem der vorherigen Ansprüche, **dadurch gekennzeichnet, dass** die Silikonimprägnierung sich wenigstens teilweise durch das Grundgewebe (2), insbesondere durch wenigstens eine Gewebeschicht des Grundgewebes (2), besonders durch das gesamte Grundgewebe (2) erstreckt.

10. Verwendung nach einem der vorherigen Ansprüche, **dadurch gekennzeichnet, dass** die Silikonimprägnierung Silikonpolymere, Silikonfluorpolymere und/oder Silanpolymere, insbesondere Silikonelastomere und/oder Fluorsilikonelastomere umfasst.

11. Verwendung nach einem der vorherigen Ansprüche, **dadurch gekennzeichnet, dass** die Silikonimprägnierung durch Sprühbeschichten, Rollbeschichten, Messerstreichen, Druckbeschichten, Extrusionsbeschichten, Bedrucken und/oder Tauchbeschichten hergestellt worden ist.

12. Verwendung nach einem der vorherigen Ansprüche, **dadurch gekennzeichnet, dass** die Außenfläche von wenigstens der produktseitigen Druckschicht (3) mit einer Antihaftbeschichtung (5), insbesondere mit einer PTFE-Beschichtung und/oder einer Fluorelastomerbeschichtung versehen ist, wobei die Antihaftbeschichtung (5) insbesondere durch Sprühbeschichten, Rollbeschichten, Messerstreichen, Druckbeschichten, Extrusionsbeschichten und/oder Drucken vorgesehen worden ist.

13. Verwendung nach einem der vorherigen Ansprüche, **dadurch gekennzeichnet, dass** die Außenfläche der produktseitigen Druckschicht (3) vor der Schaffung der Silikonimprägnierung und/oder dem Vorsehen der Antihaftbeschichtung (5) insbesondere mit einer Corona-Behandlung vorbehandelt worden sind.

14. Eine Batterieelektrodenpastiervorrichtung mit einem Batterie-Pastierband, wie es in einem der Ansprüche 1 bis 13 definiert ist.

## Revendications

1. Utilisation d'une courroie comme courroie pour empâteur de batteries (1), destinée empâter des électrodes de batteries, spécialement de plaques de batteries au plomb, en particulier sous la forme d'une courroie sans fin, présentant un côté produit (P) et un côté machine opposé (M), et comprenant un tissu de base (2), lequel est doté d'une couche de pressage côté produit (3), **caractérisée en ce que** la couche de pressage côté produit (3) est dotée d'une imprégnation de silicone, l'imprégnation s'étendant en particulier sur tout le côté produit (P).

2. Utilisation selon la revendication 1, **caractérisée en ce que** le tissu de base (2) est doté d' une couche de pressage côté machine (4), tandis que la couche de pressage côté machine (4) est en particulier dotée d'une imprégnation de silicone, l'imprégnation s'étendant en particulier sur tout le côté machine (M), tandis que l'imprégnation s'étend spécialement en grande partie à travers toute la couche de pressage côté machine (4).

3. Utilisation selon la revendication 1 ou 2, **caractérisée en ce que** l'épaisseur de la couche de pressage côté produit (3) est inférieure à l' épaisseur du tissu de base (2), dont l'épaisseur est en particulier inférieure à l'épaisseur de la couche de pressage côté machine (4).

4. Utilisation selon l' une quelconque des revendications précédentes, **caractérisée en ce que** la ou les couches de pressage (3), (4) est/sont sélectionnées parmi des non-tissés, en particulier des nappages de fibres et/ou des fils de fibres, tandis que les couches de pressage (3), (4) sont attachées au tissu de base (2) spécialement par aiguilletage.

5. Utilisation selon l'une quelconque des revendications précédentes, **caractérisée en ce que** le tissu de base (2) est un tissu tricoté, un tissu rentré, un tissu tressé, un filet, un agencement de fils, un tissu non tissé ou un tissu tissé, tandis que le tissu tissé est en particulier tissé dans une armure unie.

6. Utilisation selon l' une quelconque des revendications précédentes, **caractérisée en ce que** le tissu de base (2) comprend une pluralité de couches de tissu, en particulier de 3 à 8 couches de tissu, tandis que le tissu de base (2) est spécialement composé d'au moins une seule couche de tissu, qui est enroulée en spirale sur elle-même de manière à former la pluralité de couches de tissu.

7. Utilisation selon l'une quelconque des revendications précédentes, **caractérisée en ce que** les couches de pressage (3), (4) et/ou le tissu de base (2) comprennent un matériau de fibre polymère, qui est en particulier sélectionné parmi des polyesters, des polyamides, des polyuréthanes et/ou du polyphénylène.

8. Utilisation selon l'une quelconque des revendications précédentes, **caractérisée en ce que** l'imprégnation de silicone s'étend en grande partie à travers toute la couche de pressage côté produit (3).

9. Utilisation selon l'une quelconque des revendications précédentes, **caractérisée en ce que** l'imprégnation de silicone s'étend au moins en partie à travers le tissu de base (2), en particulier à travers au moins une couche de tissu du tissu de base (2), spécialement à travers tout le tissu de base (2).

10. Utilisation selon l'une quelconque des revendications précédentes, **caractérisée en ce que** l'imprégnation de silicone comprend des polymères de silicone, des polymères de fluorosilicone et/ou des polymères de silane, en particulier des élastomères de silicone et/ou des élastomères de fluorosilicone.

11. Utilisation selon l'une quelconque des revendications précédentes, **caractérisée en ce que** l'imprégnation de silicone a été fournie par revêtement par pulvérisation, revêtement au rouleau, enduction à la racle, revêtement par pression, revêtement par extrusion, impression et/ou revêtement au trempé.

12. Utilisation selon l'une quelconque des revendications précédentes, **caractérisée en ce que** la surface extérieure d' au moins la couche de pressage côté produit (3) est dotée d'un revêtement antiadhésif (5), en particulier d'un revêtement PTFE et/ou d'un revêtement élastomère fluoré, tandis que le revêtement antiadhésif (5) a été spécialement fourni par revêtement par pulvérisation, revêtement au rouleau, enduction à la racle, revêtement par pression, revêtement par extrusion, et/ou impression.

13. Utilisation selon l'une quelconque des revendications précédentes, **caractérisée en ce que** la surface extérieure de la couche de pressage côté produit (3) a été prétraitée avant fourniture de l'imprégnation de silicone et/ou la fourniture du revêtement antiadhésif (5), en particulier avec un traitement corona ou à flammage.

14. Appareil de collage pour électrode de batterie présentant une courroie de collage pour batteries (1) selon l'une quelconque des revendications 1 à 13.
